# EUROPÄISCHE PATENTSCHRIFT

(11) **EP 1 920 296 B1**
(45) Veröffentlichungstag und Bekanntmachung des Hinweises auf die Patenterteilung: **25.02.2009**
(21) Anmeldenummer: 06743013.2
(22) Anmeldetag: 12.05.2006
(51) Int. Cl.: G03G 15/00, B65H 23/038, B65G 15/64, B65G 39/16

(54) **TRANSPORTVORRICHTUNG**
CONVEYING DEVICE
DISPOSITIF DE TRANSPORT

(30) Priorität: 09.07.2005 DE 102005032752
(43) Veröffentlichungstag der Anmeldung: 14.05.2008
(73) Patentinhaber: Nordischer Maschinenbau Rud. Baader GmbH + Co. KG, 23560 Lübeck (DE)
(72) Erfinder: GRABAU, Thomas, 23564 Lübeck (DE)
(74) Vertreter: Wenzel & Kalkoff
(86) Internationale Anmeldenummer: PCT/EP2006/004824
(87) Internationale Veröffentlichungsnummer: WO 2007/006365

(56) Entgegenhaltungen:
- DE-A1- 1 556 739
- GB-A- 1 370 882
- US-A- 5 164 777
- US-A- 5 365 321

## Beschreibung

Die Erfindung betrifft eine Transportvorrichtung, im wesentlichen umfassend ein endloses Transportelement, das über mehrere Umlenkelemente geführt ist und einen Transportsektor und einen Rückführsektor aufweist, wobei der Transportsektor eine Transportebene definiert, einen Antrieb für das Transportelement und Elemente zum Zentrieren des Transportelementes.

Derartige Vorrichtungen kommen in unterschiedlichen industriellen Bereichen zur Anwendung. Insbesondere in der Fisch verarbeitenden Industrie sind die gattungsgemäßen Transportvorrichtungen beispielsweise im Zusammenhang mit Enthäutemaschinen eingesetzt. Dabei ist es notwendig, die häufig schnell um die Umlenkelemente laufenden Transportelemente in ihrem Lauf mittig zu zentrieren, um einen gleichmäßigen und kontinuierlichen Betrieb sicherzustellen.

Es sind Vorrichtungen bekannt, die mit seitlichen Führungsblechen, Keilleisten oder dergleichen zur Zentrierung des Transportelementes ausgestattet sind. Es hat sich jedoch gezeigt, dass sich insbesondere dünne und flexible Transportelemente, wie z.B. Transportbänder, die schnell über die Umlenkelemente laufen, nicht dauerhaft und zuverlässig führen lassen. Vielmehr laufen die Transportelemente insbesondere in solchen Fällen seitlich von den Umlenkelementen, wenn Querkräfte beispielsweise durch Einwirkung von Bearbeitungswerkzeugen auftreten. Andere Möglichkeiten der Zentrierung, wie beispielsweise die Schrägstellung von Rollen/Walzen, Keilleistenführungen oder rollende Umlenkelemente haben ebenfalls nicht den gewünschten Effekt erzielt.

Aus der GB-A-1 370 882 ist eine Vorrichtung bekannt, in dem Elemente zum Zentrieren des Transportelements mit einer nach innen gerichteten Form ausgebildet sind.

Es ist daher Aufgabe der vorliegenden Erfindung, eine Transportvorrichtung der eingangs genannten Art dahingehend zu verbessern, dass eine zuverlässige Führung bzw. Zentrierung des Transportelementes während des Betriebs gewährleistet ist.

Diese Aufgabe wird durch eine Transportvorrichtung mit den Merkmalen des Oberbegriffs des Anspruchs dadurch gelöst, dass mindestens die an entgegengesetzten Enden des Transportsektors angeordneten, als feststehende Messerkanten ausgebildeten Umlenkelemente als Elemente zum Zentrieren des Transportelementes quer zur Transportrichtung T mit einer nach innen gerichteten Form ausgebildet sind. Durch diese erfindungsgemäße Ausbildung der Umlenkelemente mindestens im Bereich des Transportsektors ist sicherstellt, dass das Transportelement zuverlässig in der gewünschten Spur bleibt, insbesondere auch bei hohen Laufgeschwindigkeiten. Die ausgehend vom Rand der Umlenkelemente nach innen verlaufende Vertiefung, die eine Art in Transportrichtung verlaufende Rinne bildet, verhindert wirksam ein Auflaufen auf den Rand und Abspringen des Transportelementes. Mit den nach innen ausgeformten Messerkanten wird in besonders zuverlässiger Weise eine Selbstzentrierung des Transportelementes erreicht.

In einer bevorzugten Weiterbildung der Erfindung sind die beiden Umlenkelemente im Bereich des Transportsektors konkav ausgebildet. Diese Form hat sich bei der Zentrierung des Transportelementes als besonders zuverlässig und in der Herstellung als besonders einfach herausgestellt.

Vorteilhafterweise ist der Antrieb als sogenannter Quetschantrieb ausgebildet. Dadurch, dass der Antrieb durch zwei in ihrer Geschwindigkeit synchronisierte Rollen erfolgt, wird die Spannung des Transportelementes stark reduziert. Am Ausgang des Quetschantriebs ist die Spannung des Transportelementes nahezu null. Dies führt wiederum dazu, dass sich die Reibung zwischen Transportelement und Umlenkelementen verringert. Des weiteren wirkt sich der genannte Effekt auf die Lebensdauer des Transportelementes aus, indem die Standzeit des Transportelementes verlängert wird. Auch können aufgrund der geringeren Reibung unterschiedliche Materialien, insbesondere auch Kunststoffe, für die Umlenkelemente eingesetzt werden.

In einer vorteilhaften Ausführ-ungsform der Erfindung ist das Transportelement insbesondere im Bereich von Umlenk- bzw. Knickstellen im Rückführsektor um weitere Umlenkelemente, die als Rollen und/oder Stäbe ausgeführt sind, geführt. Bevorzugt sind die Umlenkelemente im Bereich des Rückführsektors wahlweise feststehend und/oder bewegbar ausgebildet, wobei sämtliche feststehenden Umlenkelemente konkav ausgebildet und sämtliche bewegbaren Umlenkelemente konvex ausgebildet sind. Mit der Verteilung weiterer feststehender und/oder bewegbarer Umlenkelemente auf die gesamte Länge des Transportelementes wird die Zentrierung des Transportelementes weiter unterstützt und verbessert.

Weitere bevorzugte Ausführungsformen und vorteilhafte Merkmale der Erfindung ergeben sich aus den Unteransprüchen und der Beschreibung. Eine besonders bevorzugte Ausführungsform wird anhand der beigefügten Zeichnung näher erläutert. In der Zeichnung zeigt:
- Fig. 1: eine schematische Darstellung der Transportvorrichtung mit einem Quetschantrieb in Seitenansicht,

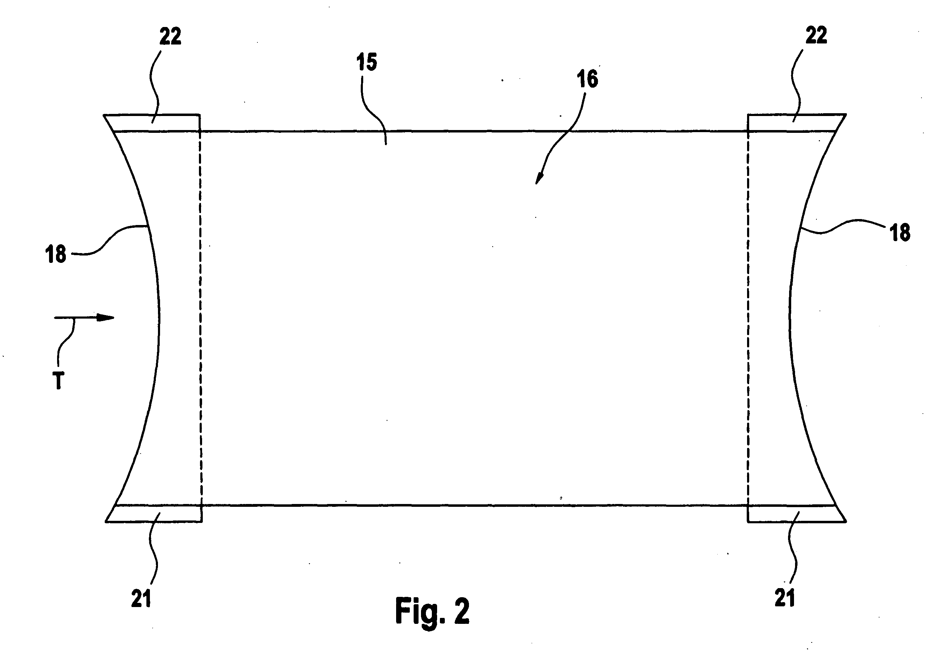

- Fig. 2: eine Draufsicht auf die Transportvorrichtung gemäß Figur 1 mit konkaven Messerkanten, und
- Fig. 3a bis 3c: verschiedene Ausführungsformen der Ausbildung der Umlenkelemente im Bereich des Transportsektors.

Die gezeigte Transportvorrichtung dient als sogenanntes Mittelband oder Führungsband in einer Enthäutevorrichtung für Fische. Selbstverständlich kann die Transportvorrichtung auch in anderen Bereichen universell eingesetzt werden.

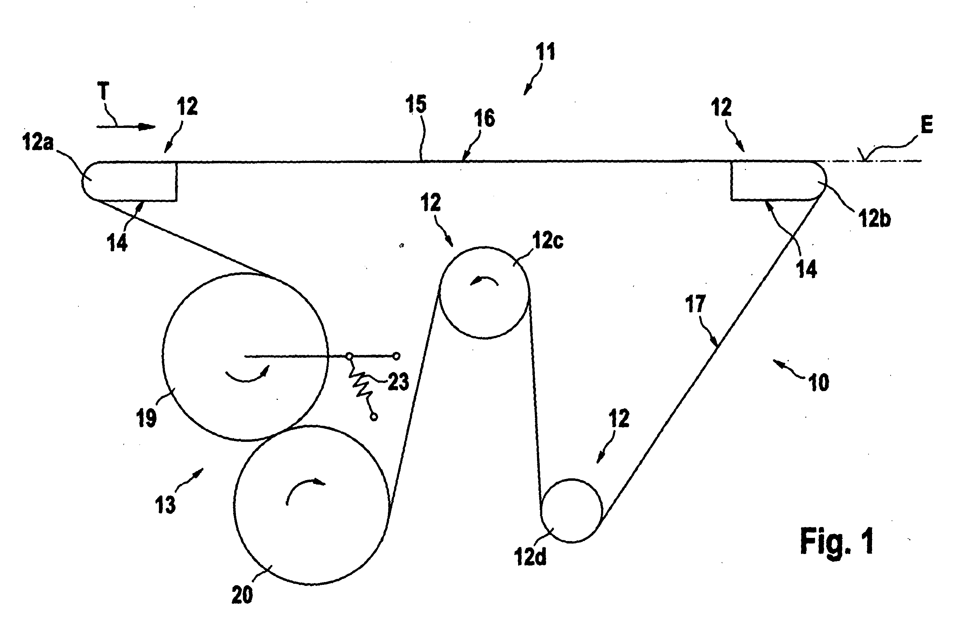

Die Transportvorrichtung 10 gemäß Figur 1 umfasst im wesentlichen ein endloses Transportelement 11, das über mehrere Umlenkelemente 12 geführt ist, einen Antrieb 13 sowie Elemente 14 zum Zentrieren des Transportelementes 11 für einen mittigen Lauf des Transportelementes 11 auf den Umlenkelementen 12. Das Transportelement 11 ist als dünnes und flexibles Transportband 15 vorteilhafterweise aus einem flexiblen Werkstoff, wie z.B. Gummi, Polyurethan oder dergleichen gebildet und verfügt über einen Transportsektor 16 und einen Rückführsektor 17. Das Transportband 15 kann aber auch aus anderen flexiblen Materialien mit oder ohne Gewebeverstärkung bestehen. Der Transportsektor 16 ist der Bereich, auf dem die Produkte, in diesem Fall Fischfilets, transportiert werden. Der Transportsektor 16 ist vorzugsweise horizontal ausgerichtet und definiert die eigentliche Transportebene E. Der Rückführsektor 17 verläuft üblicherweise unterhalb der Transportebene E.

Wie bereits weiter oben erwähnt, ist das Transportband 15 um mehrere Umlenkelemente 12 geführt. Mindestens zwei der Umlenkelemente 12, nämlich die Umlenkelemente 12a und 12b, sind im Bereich des Transportsektors 16 angeordnet, und zwar an entgegengesetzten Enden des Transportsektors 16. Genauer liegen die genannten Umlenkelemente 12a und 12b im Bereich des Einlaufs und des Auslaufs der Transportvorrichtung 10. Die Umlenkelemente 12a und 12b im Bereich des Transportsektors 16 sind derart ausgebildet, dass sie eine beschädigungsfreie Übergabe der in Transportrichtung T geförderten Produkte sicherstellen. Die Umlenkelemente 12a, 12b weisen eine Form auf, die quer zur Transportrichtung T nach innen ausgebildet bzw. gerichtet ist. Anders ausgedrückt verlaufen die Umlenkelemente 12a und 12b entlang ihrer Längserstreckung jeweils von außen nach innen abfallend, so dass die Umlenkelemente 12a und 12b auf der Strecke zwischen den beiden Außenkanten 21, 22 den tiefsten Punkt aufweisen. Dadurch dienen die Umlenkelemente 12a und 12b als Element 14 zum Zentrieren. Anders ausgedrückt sind die Elemente 14 zum Zentrieren integraler Bestandteil der Umlenkelemente 12a und 12b.

In der gezeigten Ausführungsform sind die Umlenkelemente 12a und 12b im Bereich des Transportsektors 16 als Messerkanten 18 ausgebildet. Die Messerkanten 18 sind feststehende Körper mit einem Radius im Bereich des Übergangs vom Transportsektor 16 zum Rückführsektor 17 und umgekehrt. In einer weiteren nicht dargestellten Ausführungsform können die Umlenkelemente 12a und 12b im Bereich des Transportsektors 16 auch andere Umlenkkörper oder Umlenkkanten sein. Diese üblicherweise feststehenden Umlenkkörper/Umlenkkanten weisen im Randbereich 21, 22 einen maximalen Durchmesser von ca. 16 bis 20mm auf. Die beiden Umlenkelemente 12a und 12b, also die Messerkanten 18, Umlenkkörper oder entsprechende Elemente sind im Bereich des Transportsektors 16 konkav ausgebildet, derart, dass die Wölbung von der Transportebene E wannenartig nach unten gerichtet ist.

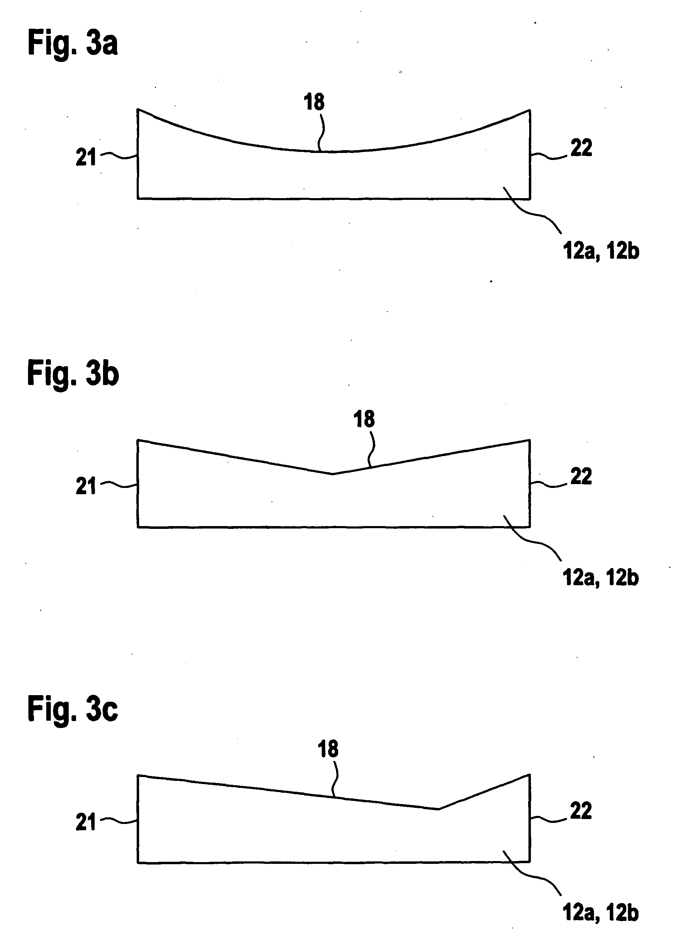

Aus den Figuren 3a bis 3c gehen verschiedene Ausformungen der Umlenkelemente 12a und 12b hervor, wobei es sich dabei lediglich um beispielhafte Formgebungen handelt. Die Umlenkelemente 12a, 12b können mit einer Wölbung oder linearen Schrägen ausgebildet sein. Neben einer symmetrischen Ausbildung (Figuren 3a und 3b) können auch asymmetrische Formen (Figur 3c) vorgesehen werden. Bevorzugt weist jedes Umlenkelement 12a, 12b den tiefsten Punkt jedoch mittig zwischen den Außenkanten 21, 22 auf.

Die Umlenkelemente 12a und 12b können aus unterschiedlichen Materialien hergestellt sein. Bevorzugt ist eine Ausbildung aus Kunststoff. Aber auch andere, wahlweise unbeschichtete oder beschichtete und/oder gehärtete Werkstoffe können eingesetzt werden.

Der Antrieb des Transportbandes 15 kann über konventionelle Bandantriebe mit einer einzelnen Antriebsrolle erfolgen. In der beschriebenen Ausführung ist der Antrieb 13 ein Quetschantrieb. Bei dem Quetschantrieb erfolgt der Antrieb durch zwei in ihrer Geschwindigkeit synchronisierte und bewegliche Rollen 19, 20, wobei das Transportband 15 zwischen diesen Rollen 19, 20 geführt ist. Am Ausgang des Quetschantriebs ist die Spannung des Transportbandes 15 daher nahezu null. Mindestens eine der Rollen 19 ist federbelastet mit einer entsprechenden Feder 23 gegen die andere Rolle 20 zur Herstellung der Quetschverbindung gedrückt bzw. gezogen. Da es sich hierbei um einen herkömmlichen Quetschantrieb handelt, wird auf eine detaillierte Beschreibung verzichtet.

Zusätzlich zu den Umlenkelementen 12a und 12b sind im weiteren Bandverlauf, also insbesondere im Rückführsektor 17, weitere Umlenkelemente 12 vorgesehen. Diese Umlenkelemente 12 sind vorzugsweise im Bereich von Umlenk- bzw. Knickstellen des Transportbandes 15 angeordnet. In der gezeigten Ausführungsform gemäß Figur 1 sind zwei zusätzliche Umlenkelemente 12 angeordnet. Die Anzahl der Umlenkelemente 12 ist jedoch variabel. Von den gezeigten Umlenkelementen 12 ist ein Umlenkelement 12c bewegbar ausgebildet, und zwar als Umlenkrolle. Das andere Umlenkelement 12d ist ein feststehender Umlenkstab. Das oder jedes bewegbare Umlenkelement 12c weist eine konvexe Form auf. Aufgrund der Beweglichkeit des Umlenkelementes 12c führt die ballige Form zu einer Zentrierung des Transportbandes 15. Das feststehende Umlenkelement 12d ist ebenso wie die Umlenkelemente 12a und 12b und alle weiteren möglichen feststehenden Umlenkelemente 12 konkav ausgebildet. Ebenso wie die Umlenkelemente 12a und 12b können auch alle weiteren Umlenkelemente 12c und 12d wahlweise aus Kunststoff oder anderen Werkstoffen gebildet sein.

## Patentansprüche

1. Transportvorrichtung, im wesentlichen umfassend ein endloses Transportelement (11), das über mehrere Umlenkelemente (12) geführt ist und einen Transportsektor (16) und einen Rückführsektor (17) aufweist, wobei der Transportsektor (16) eine Transportebene E definiert, einen Antrieb (13) für das Transportelement (11) und Elemente (14) zum Zentrieren des Transportelementes(11),**dadurch gekennzeichnet, dass** mindestens die an entgegengesetzten Enden des Transportsektors (16) angeordneten, als feststehende Messerkanten (18) ausgebildeten Umlenkelemente (12a, 12b) als Elemente (14) zum Zentrieren des Transportelementes (11) quer zur Transportrichtung T mit einer nach innen gerichteten Form ausgebildet sind.

2. Transportvorrichtung nach Anspruch 1, **dadurch gekennzeichnet, dass** die beiden Umlenkelemente (12a, 12b) im Bereich des Transportsektors (16) konkav ausgebildet sind.

3. Transportvorrichtung nach Anspruch 1 oder 2, **dadurch gekennzeichnet, dass** die beiden Umlenkelemente (12a, 12b) im Bereich des Transportsektors (16) aus Kunststoff gebildet sind.

4. Transportvorrichtung nach einem der Ansprüche 1 bis 3, **dadurch gekennzeichnet, dass** der Antrieb (13) ein Quetschantrieb ist.

5. Transportvorrichtung nach einem der Ansprüche 1 bis 4, **dadurch gekennzeichnet, dass** das Transportelement (11) ein aus flexiblem Material hergestelltes Transportband (15) ist.

6. Transportvorrichtung nach einem der Ansprüche 1 bis 5, **dadurch gekennzeichnet, dass** das Transportelement (11) insbesondere im Bereich von Umlenk- bzw. Knickstellen im Rückführsektor (17) um weitere Umlenkelemente (12), die als Rollen und/oder Stäbe ausgeführt sind, geführt ist.

7. Transportvorrichtung nach Anspruch 6, **dadurch gekennzeichnet, dass** die Umlenkelemente (12) im Bereich des Rückführsektors (17) wahlweise feststehend und/oder bewegbar ausgebildet sind.

8. Transportvorrichtung nach Anspruch 6 oder 7, **dadurch gekennzeichnet, dass** im Bereich des Rückführsektor mindestens ein bewegbares Umlenkelement (12c) und mindestens ein feststehendes Umlenkelement (12d) vorgesehen ist.

9. Transportvorrichtung nach einem der Ansprüche 6 bis 8, **dadurch gekennzeichnet, dass** das bewegbare Umlenkelement (12c) im Bereich des Rückführsektors (17) eine drehbare Umlenkrolle und das feststehende Umlenkelement (12d) im Bereich des Rückführsektors (17) ein Umlenkstab ist.

10. Transportvorrichtung nach einem der Ansprüche 1 bis 9, **dadurch gekennzeichnet, dass** sämtliche feststehenden Umlenkelemente (12a, 12b, 12d) konkav ausgebildet und sämtliche bewegbaren Umlenkelemente (12c) konvex ausgebildet sind.

11. Transportvorrichtung nach einem der Ansprüche 1 bis 10, **dadurch gekennzeichnet, dass** sämtliche Umlenkelemente (12, 12a, 12b, 12c, 12d) aus Kunststoff gebildet sind.

## Claims

1. Conveying apparatus, essentially including an endless conveying element (11) which is guided over several deflecting elements (12) and comprises a conveying sector (16) and a return sector (17), the conveying sector (16) defining a conveying plane E, a drive (13) for the conveying element (11) and elements (14) for centring the conveying element (11), **characterised in that** at least the deflecting elements (12a, 12b), constructed as stationary blade edges (18), arranged at opposite ends of the conveying sector (16) are designed as elements (14) for centring the conveying element (11) transversely to the direction of transport T with an inwardly directed shape.

2. Conveying apparatus according to claim 1, **characterised in that** the two deflecting elements (12a, 12b) in the region of the conveying sector (16) are of concave design.

3. Conveying apparatus according to claims 1 or 2, **characterised in that** the two deflecting elements (12a, 12b) in the region of the conveying sector (16) are formed from plastics.

4. Conveying apparatus according to any one of claims 1 to 3, **characterised in that** the drive (13) is a compression drive.

5. Conveying apparatus according to any one of claims 1 to 4, **characterised in that** the conveying element (11) is a conveyor belt (15) made of flexible material.

6. Conveying apparatus according to any one of claims 1 to 5, **characterised in that** the conveying element (11) particularly in the region of deflection points or bends in the return sector (17) is guided round further deflecting elements (12) which are designed as rollers and/or rods.

7. Conveying apparatus according to claim 6, **characterised in that** the deflecting elements (12) in the region of the return sector (17) are optionally stationary and/or movable.

8. Conveying apparatus according to claim 6 or 7, **characterised in that** in the region of the return sector are provided at least one movable deflecting element (12c) and at least one stationary deflecting element (12d).

9. Conveying apparatus according to any one of claims 6 to 8, **characterised in that** the movable deflecting element (12c) in the region of the return sector (17) is a rotatable deflecting roller, and the stationary deflecting element (12d) in the region of the return sector (17) is a deflecting rod.

10. Conveying apparatus according to any one of claims 1 to 9, **characterised in that** all stationary deflecting elements (12a, 12b, 12d) are concave and all movable deflecting elements (12c) are convex.

11. Conveying apparatus according to any one of claims 1 to 10, **characterised in that** all deflecting elements (12, 12a, 12b, 12c, 12d) are formed from plastics.

## Revendications

1. Dispositif de transport, comportant sensiblement un élément de transport sans fin (11), qui est guidé par plusieurs éléments de renvoi (12) et comprend un secteur de transport (16) et un secteur de retour (17), le secteur de transport (16) définissant un plan de transport E, un entraînement (13) pour l'élément de transport (11) et des éléments (14) destinés à centrer l'élément de transport (11), **caractérisé en ce qu'**au moins les éléments de renvoi (12a, 12b) disposés sur les extrémités opposées du secteur de transport (16), réalisés comme des arêtes de coupe fixes (18) sont réalisés avec une forme orientée vers l'intérieur comme des éléments (14) destinés à centrer l'élément de transport (11) transversalement à la direction de transport T.

2. Dispositif de transport selon la revendication 1, **caractérisé en ce que** les deux éléments de renvoi (12a, 12b) dans la zone du secteur de transport (16) sont réalisés de façon concave.

3. Dispositif de transport selon la revendication 1 ou 2, **caractérisé en ce que** les deux éléments de renvoi (12a, 12b) dans la zone du secteur de transport (16) sont réalisés en matière plastique.

4. Dispositif de transport selon l'une quelconque des revendications 1 à 3, **caractérisé en ce que** l'entraînement (13) est un entraînement de compression.

5. Dispositif de transport selon l'une quelconque des revendications 1 à 4, **caractérisé en ce que** l'élément de transport (11) est une bande de transport (15) fabriquée à partir d'un matériau flexible.

6. Dispositif de transport selon l'une quelconque des revendications 1 à 5, **caractérisé en ce que** l'élément de transport (11), en particulier dans la zone des points de renvoi et/ou d'inflexion dans le secteur de retour (17), est guidé autour d'autres éléments de renvoi (12) qui sont réalisés comme des rouleaux et/ou des barres.

7. Dispositif de transport selon la revendication 6, **caractérisé en ce que** les éléments de renvoi (12) dans la zone du secteur de renvoi (17) sont réalisés au choix de manière fixe et/ou mobile.

8. Dispositif de transport selon la revendication 6 ou 7, **caractérisé en ce qu'**au moins un élément de renvoi mobile (12c) et au moins un élément de renvoi fixe (12d) sont prévus dans la zone du secteur de renvoi.

9. Dispositif de transport selon l'une quelconque des revendications 6 à 8, **caractérisé en ce que** l'élément de renvoi mobile (12c) dans la zone du secteur de retour (17) est un galet de renvoi rotatif et l'élément de renvoi fixe (12d) dans la zone du secteur de retour (17) est une barre de renvoi.

10. Dispositif de transport selon l'une quelconque des revendications 1 à 9, **caractérisé en ce que** tous les éléments de renvoi fixes (12a, 12b, 12d) sont réalisés de manière concave et tous les éléments de renvoi mobiles (12c) sont réalisés de manière convexe.

11. Dispositif de transport selon l'une quelconque des revendications 1 à 10, **caractérisé en ce que** tous les éléments de renvoi (12, 12a, 12b, 12c, 12d) sont formés en matière plastique.
